# EUROPÄISCHE PATENTANMELDUNG

(11) **EP 2 225 937 A2**
(43) Veröffentlichungstag der Anmeldung: **08.09.2010**
(21) Anmeldenummer: 10001754.0
(22) Anmeldetag: 22.02.2010
(51) Int. Cl.: A01K 39/02

(54) **Kleintiertränkeventil**

(30) Priorität: 04.03.2009 DE 102009011191
(71) Anmelder: Hans Neher GmbH & Co. KG, 35789 Weilmünster (DE)
(72) Erfinder: Erbe, Siegfried, 35789 Weilmünster (DE)
(74) Vertreter: Weilnau, Carsten

(57) **Zusammenfassung**

Die Erfindung betrifft ein Kleintiertränkeventil und ein entsprechendes Montagsverfahren, wobei das Ventil (10) ein Ventilgrundgehäuse (12) aufweist, an dessen Betätigungsende (56) ein von einem Tier zur Abgabe einer Flüssigkeitsmenge betätigbarer Betätigungsstift (14; 64) zumindest bereichsweise herausragt und in dessen, dem Betätigungsende (56) gegenüberliegenden Leitungsende (58), welches mit einer Flüssigkeit führenden Leitung (18) verbindbar ist, ein Oberstift (16) verschiebbar aufgenommen ist, der mit einem Innenwandungsabschnitt (30) des Grundgehäuses (12) einen Dichtsitz (28) bildet. Die Erfindung zeichnet sich dadurch aus, dass das Ventilgrundgehäuse (12) zwischen dem Dichtsitz (28) und dem Leitungsende (58) zumindest einen radial nach innen ragenden Vorsprung (22) aufweist, der mit einem am Oberstift (16) ausgebildeten radialen Rücksprung (20) eine Verliersicherung für den Oberstift (16) am Grundgehäuse (12) bildet.

## Beschreibung

Die Erfindung betrifft ein Kleintiertränkeventil mit einem Ventilgehäuse, an dessen Betätigungsende ein von einem Tier zur Abgabe einer Flüssigkeitsmenge betätigbarer Betätigungsstift zumindest bereichsweise herausragt. Das Kleintiertränkeventil ist mit einem Leitungsende, welches dem Betätigungsende gegenüberliegt, mit einer, vorzugsweise Trinkwasser führenden Getränkeleitung koppelbar und ermöglicht eine präzise sowie tropffreie Abgabe von Wasser an Kleintiere, insbesondere an Federvieh.

Kleintiertränkeventile sind als solche im Stand der Technik, so beispielsweise aus der DE 43 02 973 A1 bekannt. Dieses Kleintiertränkeventil weist ein Ventilgehäuse und ein auslassseitiges, in das Gehäuse einsetzbares Innenteil sowie ein einlassseitiges elastisches Befestigungsglied auf. Im Gehäuseinnenraum befindet sich mit Spiel ein kugelförmiges Ventildichtelement, dem ein stationärer ringförmiger konischer Ventildichtsitz am Innenteil zugeordnet ist. Unter Schwerkrafteinfluss legt sich das Ventildichtelement abdichtend auf den Ventildichtsitz.

Unterhalb des Ventildichtelements ist auslassseitig ein Ventilbetätigungsstift mit einem zylindrischen Kopf vorgesehen, der beim Anheben und/oder Kippen des Stifts das Ventildichtelement vorübergehend von dem Ventildichtsitz abhebt. Dieses durch den Betätigungsstift initiierbare Abheben des Ventildichtsitzes führt zur Abgabe einer wohldosierten Flüssigkeitsmenge, typischerweise eines oder mehrerer Wassertropfen.

Ein weiteres Tränkeventil für Kleintiere ist aus der DE 197 12 748 C2 bekannt. Dieses weist ein Gehäuse und einen darin auf und ab sowie kippbar gelagerten Ventilstift und einen oberhalb des Ventilstifts auf und ab bewegbar angeordneten Oberstift auf. Dabei ist zwischen dem Gehäuse und dem Oberstift sowie dem Ventilstift jeweils ein Dichtsitz vorgesehen. Der Dichtsitz bildet zugleich einen Endanschlag für die Abwärtsbewegung des Oberstifts. In entgegengesetzter Richtung ist am Ventil jedoch keine Begrenzung für die Verschiebebewegung des Oberstifts nach oben hin vorgesehen. Ein Herausfallens des Oberstifts aus dem Ventilgehäuse wird erst mit Montage des Ventils an einer Wasserleitung verhindert.

Indem das leitungsseitige Ende des Ventils in einen unteren Wandungsabschnitt einer Leitung eingeschraubt wird, kommt ein oberer Zylinderabschnitt des Oberstifts in etwa mittig zum Leitungsquerschnitt zu liegen. Dabei ist der axiale Abstand zwischen dem Oberstift und einer gegenüberliegenden Innenwand der Leitung kleiner als die Axialerstreckung des Oberstifts zu wählen, damit dieser nach Montage des Ventils an der Leitung nicht mehr aus dem Ventilgehäuse herausrutschen kann, sondern allenfalls an der gegenüberliegenden Leitungsinnenwand anschlägt.

Ein derartiges Tränkeventil gestaltet sich insoweit als nachteilig, dass ein Monteur bei der Montage des Ventils an der Wasserleitung stets dafür Sorge tragen muss, dass der Oberstift im Gehäuse des Ventils verbleibt. Zudem wird durch das relativ weite Hineinragen des Oberstifts und des Ventilgehäuses in die Wasserleitung hinein, der nutzbare Leitungsquerschnitt verringert. Dies kann sich insbesondere bei einer großen Anzahl von an der Leitung anzuordnenden Ventilen strömungstechnisch als nachteilig erweisen. Auch muss unter Umständen der Wasserdruck in der Leitung erhöht werden, um eine ausreichende Wasserversorgung sämtlicher Ventile zu gewährleisten. Ferner ist die Geometrie der Wasserleitung an jene des Ventils anzupassen und umgekehrt.

Die DE 198 30 586 B4 beschreibt ein Tränkeventil, bei dem ein Herausfallen des Oberstifts aufgrund seines eigenen Gewichts aus dem Gehäuse verhindert werden kann. Das Gehäuse weist hierfür ein Aufnahmeteil für wenigstens einen Teil der Ventilanordnung und ein Verbindungsteil zur Befestigung des Aufnahmeteils mit der Ventilanordnung am Wasserversorgungsorgan auf. Zwischen dem Aufnahmeteil und dem Verbindungsteil ist dabei eine Rastverbindung angeordnet.

Der Oberstift weist ferner einen radial verbreiterten mittleren Zylinderabschnitt auf, der bei der Montage des Ventils durch einen radial verjüngten Endabschnitt des Aufnahmeteils hindurchgedrückt werden kann. Der obere Abschnitt des Aufnahmeteils wird dabei elastisch aufgeweitet. Sobald der mittlere Zylinderabschnitt des Oberstifts durch den radial verjüngten Abschnitt des Aufnahmeteils hindurchgedrückt ist, befindet sich der Oberstift frei beweglich im Gehäuse. Der obere Abschnitt des Aufnahmeteils weist hierbei einen geringfügig engeren Durchmesser als der mittlere Zylinderabschnitt des Oberstifts auf.

Ein solches Ventil gestaltet sich fertigungs- als auch montagetechnisch insoweit als nachteilig, dass allein schon das Ventilgehäuse dreiteilig mit einem Aufnahmeteil, einer Einsatzhülse und einem Verbindungsteil auszubilden ist. Zum Einsetzen des Oberstifts in das aus Kunststoff gefertigte Aufnahmeteil ist ferner dessen elastische Aufweitung im Bereich einer Flüssigkeitszufuhr erforderlich.

Generell ist bei solchen Tränkeventilen das Spaltmaß zwischen dem Oberstift und dem elastisch aufweitbaren oberen Abschnitt des Aufnahmeteils für die Regulierung des Durchflusses durch das Ventil als dominierende Regelgröße zu betrachten. Insbesondere in diesem Bereich sollte das Ventil eine hohe Maßhaltigkeit aufweisen, die jedoch mit einem elastisch deformierbaren Gehäuseabschnitt nur bedingt zu erreichen ist.

Der vorliegenden Erfindung liegt demnach die Aufgabe zugrunde, ein unter fertigungsrationellen, insbesondere montagetechnischen Gesichtspunkten verbessertes Kleintiertränkeventil zur Verfügung zu stellen. Das erfindungsgemäß weiterzubildende Kleintiertränkeventil soll sich zudem durch Materialeinsparung gegenüber dem Stand der Technik und einer damit einhergehenden Gewichtsreduzierung auszeichnen. Zudem soll das Kleintiertränkeventil universell mit beliebig ausgebildeten Leitungsquerschnitten koppelbar sein und den von Flüssigkeit durchströmbaren Leitungsquerschnitt einer Leitung nur unwesentlich beeinträchtigen.

Die Erfindung zugrundeliegende Aufgabe wird mit einem Kleintiertränkeventil gemäß Patentanspruch 1 und einem zugehörigen Montageverfahren gemäß Patentanspruch 15 gelöst. Einzelne vorteilhafte Ausgestaltungen der Erfindung sind in den abhängigen Patentansprüchen angegeben.

Das erfindungsgemäße Kleintiertränkeventil weist ein Ventilgrundgehäuse auf, an dessen Betätigungsende ein von einem Tier betätigbarer Betätigungsstift zumindest bereichsweise herausragt. Dieser Betätigungsstift ist in Axialrichtung auf und ab bewegbar im Ventilgrundgehäuse gelagert. Alternativ oder ergänzend kann der Betätigungsstift auch gegenüber einer Symmetrieachse des Ventilgrundgehäuses kippbar an diesem gehalten sein.

Der Betätigungsstift steht im Inneren des Ventilgrundgehäuses mit einem Oberstift in Wechselwirkung, welcher im Gehäuse axial, insbesondere auf- und ab verschiebbar aufgenommen ist und welcher mit einem Innenwandungsabschnitt des Grundgehäuses einen Dichtsitz bildet. Durch eine vom Betätigungsstift initiierbare Aufwärtsbewegung des Oberstifts kann der Dichtsitz zwischen Oberstift und zugehörigem Innenwandungsabschnitt des Grundgehäuses gelöst werden und eine wohldefinierte Flüssigkeitsmenge, etwa ein oder mehrere Wassertropfen können durch das Ventil gelangen und am freien Endabschnitt des Betätigungsstifts, welcher am Betätigungsende aus dem Ventilgrundgehäuse hervorragt, herab rinnen und dort vom Tier aufgenommen werden. Ergänzend kann hierbei vorgesehen sein, dass auch der Betätigungsstift mit einem dafür vorgesehenen Innenwandungsabschnitt des Grundgehäuses einen weiteren Dichtsitz bildet.

Erfindungsgemäß ist eine Verliersicherung für den Oberstift am Grundgehäuse vorgesehen. Diese wird dadurch gebildet, dass das Ventilgrundgehäuse zwischen dem Dichtsitz und einem Leitungsende, welches dem Betätigungsende gegenüberliegt und mit welchem das Ventil mit einer Flüssigkeit führenden Leitung verbindbar ist, zumindest einen radial nach innen ragenden Vorsprung aufweist. Dieser radial nach innen ragende, axial zwischen einem Leitungsende und dem Dichtsitz des Grundgehäuses angeordnete Vorsprung bildet mit einem am Oberstift ausgebildeten radialen Rücksprung eine Verliersicherung für den Oberstift. Die Verliersicherung ist somit in einem mittleren Teilbereich des Ventilgrundgehäuses angeordnet. Es kann ein vorgegebenes Spaltmaß zwischen Oberstift und Ventilgrundgehäuse passgenau eingehalten werden und die Flüssigkeitszufuhr, bzw. der von der Flüssigkeit durchströmbare Querschnitt, ist durch die Ausgestaltung der Verliersicherung nicht oder nur unwesentlich beeinträchtigt.

Durch die ventilinhärente Verliersicherung gestalten sich der gesamte Montageprozess und die Handhabung des Ventils beim Verbinden mit der Leitung, etwa beim Einschrauben des Ventils mit seinem Leitungsende in die Leitung, wesentlich einfacher. So muss ein Monteur fortan nicht mehr dafür Sorge tragen, dass der Oberstift etwa unbeabsichtigt aus dem vormontierten Ventil, etwa beim Einschrauben des Ventils in die Leitung, nicht aus dem Ventilgehäuse herausfällt.

Auch werden durch die erfindungsgemäße Verliersicherung die Adaptierbarkeit und die Einsatzmöglichkeiten des Ventils für eine Vielzahl von Trinkwasser führenden Leitungen erhöht. Denn das Befestigen des Ventils an der Leitung kann unabhängig von der konkreten Ventilausrichtung und der Schwerkrafteinwirkung erfolgen. Ferner kann durch die ventilinhärente Verliersicherung erreicht werden, dass das Ventil universell an verschiedene Leitungen unterschiedlichster Querschnittsgeometrie koppelbar ist. Ein einziger erfindungsgemäßer Ventiltyp ist grundsätzlich zur Kopplung mit nahezu allen erdenklichen Leitungsquerschnitten geeignet.

Ferner kann durch die erfindungsgemäße Verliersicherung eine Verkürzung der Axialerstreckung des Oberstifts erreicht werden. Diese Verkürzung geht mit einer Material- und Gewichtseinsparung einher. Sie bewirkt zudem, dass der von Flüssigkeit durchströmbare Leitungsquerschnitt nur noch unwesentlich durch die Anbringung des Ventils beeinträchtigt wird. Im Vergleich zu einer aus dem Stand der Technik, etwa in der DE 197 12 748 C2 beschriebenen Ventilanordnung kann der von Flüssigkeit durchströmbare Leitungsquerschnitt erhöht und der Strömungswiderstand der Leitung in vorteilhafter Weise verringert werden.

Nach einer ersten vorteilhaften Weiterbildung der Erfindung ist vorgesehen, dass der für die Verliersicherung vorgesehene, radial nach innen ragende Vorsprung durch eine von außen in das Grundgehäuse einbringbare, radial nach innen gerichtete Materialverdrängung gebildet ist. Hierfür ist insbesondere eine radial nach innen gerichtete lokale Prägung des Grundgehäuses in geeigneter Geometrie, etwa punktförmig, rund und/oder umlaufend vorgesehen. Andere geometrische Ausgestaltungen einer von außen einzubringenden radial nach innen gerichteten Prägung zur Bildung des an der Innenseite des Grundgehäuses radial nach innen ragenden Vorsprungs sind jedoch gleichermaßen im Rahmen der vorliegenden Erfindung.

Dadurch, dass der zur Bildung der Verliersicherung nach innen ragende, gehäuseseitige Vorsprung erst nach einem Einsetzen des Oberstifts in das Grundgehäuse erfolgt, kann auf den Einsatz elastisch nachgiebiger Materialien in vorteilhafter Weise verzichtet werden. Durch die Verwendung besonders stabiler und biegesteifer Materialien, insbesondere für den Oberstift und für das den Oberstift einfassende Leitungsende des Ventilgehäuses, kann eine geforderte Maßhaltigkeit eines Flüssigkeitseinlassschlitzes zur Verfügung gestellt werden.

Es ist dabei insbesondere vorgesehen, dass jener Flüssigkeitseinlassschlitz zwischen Oberstift und dem in der Leitung liegenden oberen Leitungsende des Grundgehäuses einen in Durchflussrichtung des Ventils gesehen kleinsten durchströmbaren Querschnitt darstellt. Auf diese Art und Weise kann sichergestellt werden, dass etwaige, in jenen Flüssigkeitseinlassschlitz eindringenden Schmutzpartikel nicht oder nur in geringem Maße im Ventilkörper verbleiben und mit der durchströmenden Flüssigkeit aus diesem wieder herausgespült werden.

Von Vorteil ist ferner, wenn am Grundgehäuse mehrere über dessen Umfang gleichmäßig verteilt angeordnete, nach innen ragende Vorsprünge ausgebildet sind. Dementsprechend sind auch über den Außenumfang vorgesehene, durch Prägung in das Gehäuse einzubringende Vertiefungen vorgesehen. Durch eine Vielzahl gleichmäßig verteilt angeordneter Vorsprünge kann einem Verklemmen des Oberstifts gegenüber dem Ventilgrundgehäuse entgegengewirkt werden. Sind beispielsweise drei über den Umfang verteilt angeordnete Vorsprünge, bzw. nach innen ragende Prägungen vorgesehen, so sind diese vorzugsweise in einem Winkel von 120° über den Außenumfang verteilt zueinander angeordnet. Sind nur zwei lokale Prägungen vorgesehen, so sollten diese gegenüberliegend, folglich in einem Winkel von 180° zueinander angeordnet sein. Bei vier vorzusehenden Materialverprägungen sind Winkel von etwa 90° zwischen umfangsseitig benachbart angeordneten Vertiefungen vorzusehen.

Nach einer weiteren vorteilhaften Ausgestaltung weist das Ventilgrundgehäuse an seinem Leitungsende ein Außengewinde auf, mit welchem das Gehäuse in die Leitung einschraubbar ist. Hierbei ist insbesondere vorgesehen, das Außengewinde als selbstschneidendes Gewinde auszubilden, sodass bei Verwendung einer Leitung aus Kunststoff in dieser lediglich eine entsprechende Durchgangsöffnung vorzusehen ist. Das Einschneiden eines leitungsseitigen Innengewindes erfolgt dann direkt im Zuge des Montageprozesses des Ventils, vorzugsweise durch Einschrauben seines Gehäuses in die an der Leitung ausgebildete Durchgangs- oder Aufnahmeöffnung.

Das Grundgehäuse weist nach einer weiteren vorteilhaften Ausgestaltung eine umlaufende, in Richtung des Betätigungsendes an das Gewinde angrenzende Nut auf. In einer Endmontagekonfiguration des Ventils an der Leitung kommt diese Nut außerhalb, vorzugsweise vollständig außerhalb der Außenwandung der Leitung zu liegen. Nach einer Weiterbildung ist diese Nut zur Aufnahme eines Schutzkörpers für das Ventil vorgesehen, der nach Montage des Ventils an der Leitung in jene außerhalb der Leitung zu liegen kommende Nut einclipsbar ist.

Des Weiteren ist vorgesehen, dass das Grundgehäuse im Bereich der Nut zumindest eine mit dem innenliegenden Vorsprung korrespondierende Vertiefung aufweist. Das heißt, die zur Bildung des nach innen ragenden und für die Bildung der Verliersicherung vorgesehenen Vorsprungs an der Außenseite des Grundgehäuses einzubringende Vertiefung, wird vorzugsweise im Bereich jener an das Außengewinde angrenzenden Nut eingebracht. Dadurch, dass das Ventilgrundgehäuse im Bereich dieser Nut eine geringere Wandstärke aufweist, kann eine zielgerichtete Verprägung und Materialverdrängung verhältnismäßig einfach erreicht werden. Auch kann vorgesehen sein, die Tiefe der Nut und die hierdurch gebildete Wandstärke derart auszubilden, dass eine zur Erzielung der Verliersicherung vorteilhafte Formgebung des nach innen ragenden Vorsprungs erreicht werden kann.

Nach einem weiteren vorteilhaften Aspekt der Erfindung besteht das Kleintiertränkeventil ausschließlich aus drei Komponenten, nämlich dem Grundgehäuse, dem Oberstift und dem Betätigungsstift. Hierdurch gestalten sich die Montage des Ventils und seine Befestigung an der Leitung als besonders einfach. Auch unter fertigungsrationellen Gesichtspunkten verringert sich der Aufwand zur Handhabung der Ventileinzelteile, was sich insbesondere in der industriellen Massenproduktion als vorteilhaft erweist.

Nach einer weiteren vorteilhaften Ausgestaltung ist vorgesehen, dass das Grundgehäuse, der Oberstift und der Betätigungsstift aus Metall, vorzugsweise aus Edelstahl gefertigt sind. Dadurch, dass sämtliche Komponenten des Ventils aus Metall gefertigt sein können, kann eine besonders hohe Maßhaltigkeit der einzelnen Bauteile sowie des gesamten Ventils erreicht werden. Das Ventil kann auf diese Art und Weise besonders korrosionsbeständig ausgebildet sein und sich durch eine besonders lange Lebensdauer auszeichnen.

Weiterhin ist vorgesehen, dass der Betätigungsstift mit einem innerhalb des Grundgehäuses zu liegen kommenden radial verbreiterten Kopf an einem radial nach innen ausgebildeten Absatz des Grundgehäuses axial verschiebbar und/oder gegenüber der Symmetrieachse des Grundgehäuses kippbar gehalten ist. Es ist dabei insbesondere vorgesehen, dass der Kopf des Betätigungsstifts mit seiner Oberseite mit der gegenüberliegenden Unterseite des Oberstifts zumindest infolge einer Betätigung des Betätigungsstifts zur Anlage bringbar ist, sodass durch Axialverschiebung oder Verkippung des Betätigungsstifts und seines Kopfs eine bestimmungsgemäße, vorzugsweise nach oben, zur Aufhebung des Dichtsitzes gerichtete Axialbewegung des Oberstifts initiierbar ist.

Der Betätigungsstift, insbesondere sein Kopf, ist an die Innenabmessungen des Ventilgrundgehäuses, insbesondere an den zur Aufnahme des Kopfes vorgesehenen Absatz angepasst. Angrenzend an jenen Kopf ist der Betätigungsstift vorzugsweise zylindrisch ausgebildet. Er kann dabei insbesondere in seinem, aus dem Ventilgehäuse herausragenden unteren freien Endabschnitt unterschiedliche Zylinderdurchmesser aufweisen. Für den Betätigungsstift sind insoweit verschiedene Ausgestaltungen denkbar, die jedoch allesamt einen Kopf mit im Wesentlichen gleichen Abmessungen aufweisen.

Die unterschiedlichen Betätigungsstifte unterscheiden sich dabei durch die Form, insbesondere durch den Durchmesser des aus dem Gehäuse herausragenden Stiftendes. Der sich in Axialrichtung an den Kopf anschließende Bereich des Betätigungsstifts kann durchgehend zylindrisch ausgebildet, das heißt mit einem konstanten Außendurchmesser versehen sein. Alternativ ist für andere Ausgestaltungen des Betätigungsstiftes denkbar, dass der Stift an seinem freien Endabschnitt einen anderen, vorzugsweise kleineren Außendurchmesser aufweist als an seinem an den Kopf angrenzenden Abschnitt. So kann das Kleintiertränkeventil an unterschiedliche Anforderungsprofile durch Verwendung eines lediglich entsprechend ausgebildeten Betätigungsstifts angepasst werden. Bei jenen unterschiedlichen Ausgestaltungen des Ventils können der Oberstift und das Ventilgrundgehäuse jedoch immerwährend gleichbleibend ausgebildet sein.

Nach einem weiteren vorteilhaften Aspekt der Erfindung ist vorgesehen, dass der Oberstift einen im Leitungsende des Grundgehäuses zu liegen kommenden und axial darin geführten oberen Zylinderabschnitt und in einem daran angrenzenden Mittelabschnitt den als umlaufende Nut ausgebildeten Rücksprung aufweist. An den Mittelabschnitt grenzen ein unterer, radial verbreiterter Zylinderabschnitt oder ein Konusabschnitt an. Jener Zylinderabschnitt oder Konusabschnitt ist dabei als radiale Anschlagsfläche ausgebildet, die dazu vorgesehen ist, mit dem am Gehäuse radial nach innen ragenden Vorsprung die erfindungsgemäße Verliersicherung für den Oberstift zu bilden. Geometrie und Formgebung von oberstiftseitigem Zylinderabschnitt oder Konusabschnitt und gehäuseseitigem radialen Vorsprung sind derart aufeinander abgestimmt, dass ein Verklemmen von Oberstift und Gehäuse weitgehend vermieden werden kann.

Nach einem weiteren unabhängigen Aspekt der Erfindung ist ein Verfahren zur Montage des vorbeschriebenen Kleintiertränkeventils vorgesehen, wobei in einem ersten Schritt der Betätigungsstift in das Leitungsende des Grundgehäuses eingeführt wird, bis der Stift mit seinem sich in Axialrichtung erstreckenden freien Endabschnitt aus dem Betätigungsende des Gehäuses herausragt und mit einem radial verbreiterten Kopf innerhalb des Gehäuses an einem Absatz des Gehäuses zu liegen kommt und daran gehalten wird. Hiernach wird der Oberstift in selbiges Leitungsende des Grundgehäuses eingeführt, bis dieser einen Dichtsitz mit einem dafür vorgesehenen Grundgehäuseabschnitt bildet.

Nach Montage des Oberstifts ist schließlich die Anbringung der Verliersicherung von Oberstift und Gehäuse vorgesehen. Hierfür wird eine Materialverdrängung von außen in das Grundgehäuse eingebracht, dergestalt, dass ein von der Innenwandung des Grundgehäuses radial hervor ragender Vorsprung gebildet wird, welcher mit einem im Oberstift ausgebildeten Rücksprung, etwa mit einer umlaufenden Nut des Mittelabschnitts des Oberstifts korrespondiert, bzw. darin zu liegen kommt. Die axiale Erstreckung der als Rücksprung fungierenden Nut des Mittelabschnitts des Oberstifts entspricht dem in Endmontagekonfiguration des Ventils maximalen axialen Verschiebewegs des Oberstifts.

Typischerweise wird eine nach unten, zum Betätigungsstift hin gerichtete Axialverschiebung des Oberstifts durch den Dichtsitz von Oberstift und Grundgehäuse begrenzt, während die entgegengerichtete Axialbewegung, eine in Richtung zur Leitung hin gewandte Aufwärtsbewegung des Oberstifts, durch die miteinander korrespondierenden Vorsprünge bzw. Rücksprünge begrenzt wird.

Weitere Ziele, Merkmale sowie vorteilhafte Anwendungsmöglichkeiten der Erfindung werden in der nachfolgenden Beschreibung unter Bezugnahme auf die Zeichnungen erläutert. Dabei bilden sämtliche beschriebenen und/oder bildlich dargestellten Merkmale sowohl in Alleinstellung als auch in jeglicher sinnvollen Kombination untereinander den Gegenstand der vorliegenden Erfindung. Es zeigen:
- Fig. 1: eine schematische Querschnittsdarstellung des Ventils in Montagestellung an einer Wasserleitung,
- Fig. 2: eine schematische teils geschnittene Darstellung des Ventilgehäuses gemäß Fig. 1,
- Fig. 3: eine Seitenansicht des Oberstifts gemäß dem Ventil nach Fig. 1,
- Fig. 4: eine Seitenansicht des Betätigungsstifts eines Ventils gemäß Fig. 1 und
- Fig. 5: eine alternative Ausgestaltung des Betätigungsstifts mit zylindrischen Abschnitten unterschiedlichen Durchmessers.

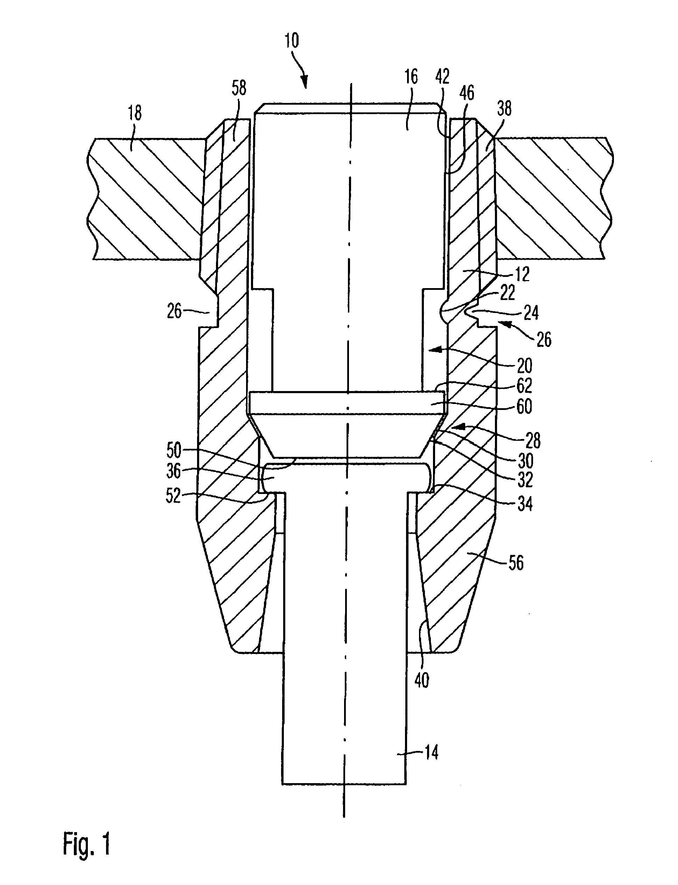

Das in Fig. 1 gezeigte Kleintiertränkeventil 10 weist ein Ventilgrundgehäuse 12 auf, welches an seinem in Fig. 1 untenliegenden Endabschnitt ein Betätigungsende 56 und gegenüberliegend ein Leitungsende 58 aufweist, mit welchem das Gehäuse 12 in einer Wandung 18 einer Flüssigkeit führenden Leitung, insbesondere einer Wasserleitung, in der in Fig. 1 gezeigten Endmontagestellung zu liegen kommt. Außenseitig am Leitungsende 58 weist das Gehäuse 12 ein Außengewinde 38 auf, welches vorzugsweise selbstschneidend ausgebildet ist, sodass beim Einschrauben des Gehäuses 12 in die Leitungswand 18 in letzterer ein entsprechendes Gegengewinde eingeschnitten wird.

Im Ventilgrundgehäuse 12 sind zwei weitere Ventilkomponenten, nämlich ein Oberstift 16 und ein Betätigungsstift 14 verschiebbar und/oder kippbar gehalten. Der Oberstift 16 weist an seinem oberen, der Leitung 18 zugewandten Endabschnitt, einen oberen zylindrischen Abschnitt 46 auf, mittels welchem der Oberstift 16 in einem entsprechend zylindrisch ausgebildeten oberen Abschnitt 42 des Gehäuses 12 axial verschieblich, also auf und ab beweglich geführt ist. Eine Auf- und Abbewegung des Oberstifts 16 kann durch eine gleichgeartete Auf- und Abbewegung oder Kippbewegung des Betätigungsstifts 14 und unter dem Einfluss der Schwerkraft initiiert werden.

Der Betätigungsstift 14 weist im Gehäuse 12 liegend einen radial verbreiterten Kopf 36 auf, weicher an einem radial nach innen gerichteten Vorsprung oder Absatz 34 des Gehäuses 12 zur Anlage gelangt. Eine von einem Tier, etwa einem Huhn, am untenliegenden Endabschnitt des Betätigungsstifts 14 initiierte Kippbewegung des Stifts 14 führt durch die Auflage des Kopfs 36 am Vorsprung 34 dazu, dass sich eine an der Unterseite des Kopfes 36 vorgesehene Dichtfläche 52 zumindest partiell vom Absatz 34 abhebt, und jene Verkippung des Stifts 14 über die untenliegenden Stirnfläche 50 des Oberstifts 16 eine entsprechende, nach oben gerichtete Axialbewegung des Oberstifts bewirkt.

Demzufolge wird der Oberstift 16 zumindest geringfügig angehoben, sodass der von den gegenüberliegenden Konusflächen 32, 30 von Oberstift 16 und Gehäuseinnenwand gebildete Dichtsitz 28 temporär aufgehoben wird und somit eine wohldefinierte Flüssigkeitsmenge nach unten abfließen und am Betätigungsstift, vorzugsweise tröpfchenartig, entlang rinnen kann. Das trinkwillige Tier kann schließlich den sich durch Betätigung des Stifts 14 an dessen unteren Endabschnitt bildenden Tropfen aufnehmen.

Der lichte Innendurchmesser des oberen zylindrischen Abschnitts 42 des Gehäuses 12 ist geringfügig größer ausgebildet als der Außendurchmesser des darin zu liegen kommenden axial geführten oberen Zylinderabschnitts 46 des Oberstifts 16, sodass ein vorgegebenes Spaltmaß zwischen gegenüberliegenden Zylinderabschnitten 42, 46 zum Einlass von Flüssigkeit, etwa Wasser, zur Verfügung gestellt werden kann.

Zur Bildung einer Verliersicherung ist am Oberstift 16 ein etwa nutartig ausgebildeter Rücksprung 20 ausgebildet, während gehäuseseitig eine von außen im Bereich einer umlaufenden Nut 26 einzubringende Vertiefung 24 durch Materialverdrängung der Gehäusewandung 12 einen radial nach innen ragenden Vorsprung 22 bildet. Der untere, an den Konus 32 angrenzende zylindrische Abschnitt 60 des Oberstifts 16 weist einen dem oberen zylindrischen Abschnitt 46 des Oberstifts 16 entsprechenden Außendurchmesser auf. Sollte sich der Oberstift 16 etwa schwerkraftbedingt gegenüber dem Grundgehäuse 12 nach oben bewegen, was beispielsweise bei einem Umdrehen des gesamten Ventils 10 der Fall wäre, so würde der am Oberstift 16 ausgebildete Anschlag 62 am radial nach innen ragenden Vorsprung 22 zur Anlage gelangen und an diesem nicht vorbeigeführt werden können. Ein Herausgleiten des Oberstifts 16 aus dem Gehäuse 12 kann somit vermieden werden.

Die Tiefe der umlaufenden Nut 26, welche von unten an das Gewinde 38 angrenzt, bestimmt die Wanddicke des dementsprechend verbleibenden Grundgehäuseabschnitts. Je nach verbleibender Wandstärke kann sich eine durch Einbringen einer Vertiefung 24 initiierte Materialverdrängung in unterschiedlicher Art und Weise zu einem radial nach innen ragenden Vorsprung 22 fortpflanzen. Dabei ist insbesondere vorgesehen, dass der Vorsprung 22 und die am Vorsprung 22 zur Anlage gelangende Anschlagsfläche 62 des Oberstifts 16 solche Geometrien und Formgebungen aufweisen, die ein wechselseitiges Verklemmen verhindern. Abgerundete, insbesondere konkav abgerundete Außenkonturen von Anschlagsfläche 62 und Vorsprung 22 können sich hierbei als vorteilhaft erweisen.

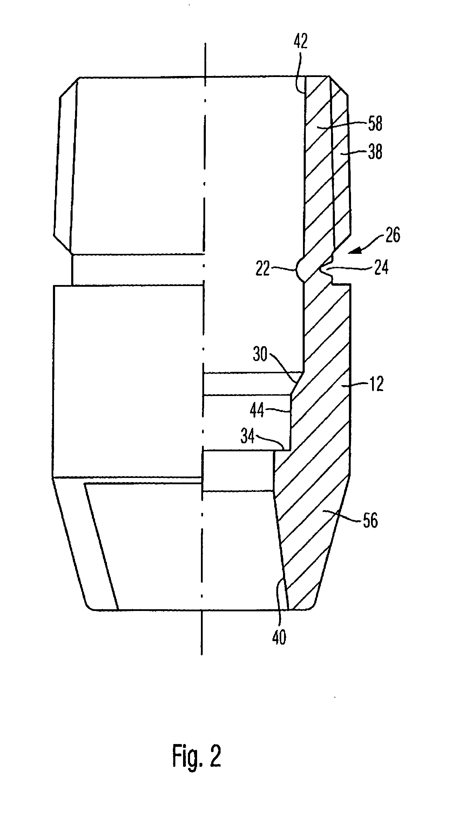

In Fig. 2 sind die einzelnen Abschnitte des Grundgehäuses 12 einzeln dargestellt. Am untenliegenden Betätigungsende 56 ist eine sich konisch erweiternde Innenfläche 40 vorgesehen, die ein seitliches Verkippen des am Absatz 34 zur Anlage gelangenden Betätigungsstifts 14 ermöglichen soll. Der Betätigungsstift 14 ist ferner mit seinem Kopf 36 in dem an den Absatz 34 angrenzenden zylindrischen Innenwandabschnitt 44 des Gehäuses 12 axial verschiebbar. Hieran grenzt nach oben, zur Leitung 18 hin, eine sich radial verbreiternde Konusfläche 30 an, welche zusammen mit einer korrespondierenden konisch ausgebildeten Dichtfläche 32 des Oberstifts 16 den Dichtsitz 28 bildet. Die Abdichtung des Ventils 10 mittels des Dichtsitzes 28 erfolgt vorzugsweise schwerkraftbedingt. Vom oberen Endabschnitt der Konusfläche 30 erstreckt sich eine im Wesentlichen zylindrische Innenwand 42 des Gehäuses 12. Diese ist einzig im Bereich der außenliegenden Nut 26 von einem oder von mehreren, über den Umfang verteilt angeordneten, radial nach innen gerichteten Vorsprüngen 22 unterbrochen.

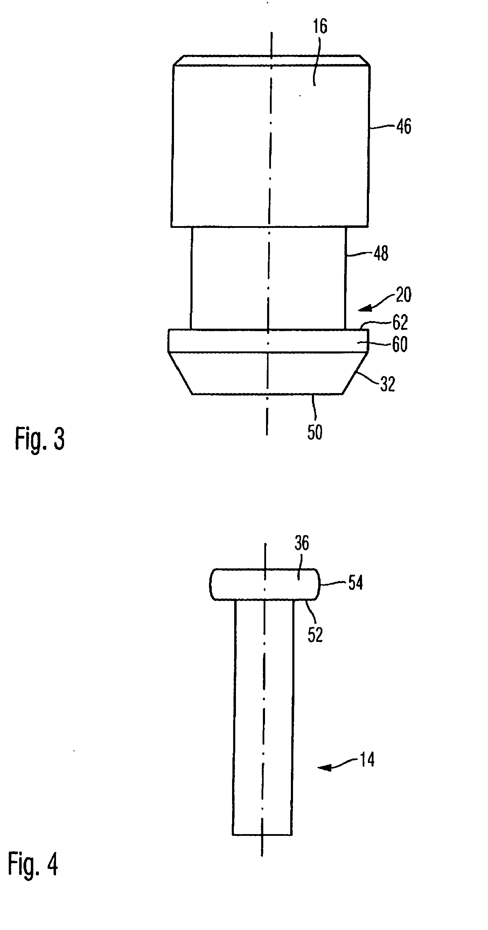

Fig. 3 zeigt in separater Darstellung den Oberstift 16, welcher einen oberen zylindrischen Abschnitt 46 und einen radial verjüngten zylindrischen Abschnitt 48 aufweist, der zugleich den Rücksprung 20 für die Verliersicherung bildet. An der Unterseite weist der Oberstift 16 einen unteren zylindrischen Abschnitt 60 auf, der gegenüber dem Zylinderabschnitt 48 radial verbreitert ausgebildet ist und in etwa den gleichen Durchmesser wie der obere Zylinderabschnitt 46 aufweist. An der Oberseite jenes unteren zylindrischen Abschnittes 60 ist eine Anschlagsfläche 62 vorgesehen, welche zusammen mit dem radial nach innen ragenden Vorsprung 22 des Gehäuses 12 die erfindungsgemäße Verliersicherung bildet.

Wenngleich die Darstellung gemäß Figur 3 eine konische Dichtfläche 32 zeigt, kann der Dichtsitz 28 auch mittels einer konvex gewölbten Dichtfläche des Oberstifts 16 erreicht werden.

Fig. 4 zeigt schließlich in schematischer Darstellung einen Betätigungsstift 14, welcher im Bereich seines obenliegenden radial verbreiterten und mit einer Abrundung 54 versehenen Kopf 36 aufweist. An der Unterseite des Kopfs 36 ist eine Dichtfläche 52 ausgebildet, welche zusammen mit dem im Wesentlichen in Radialrichtung verlaufenden Absatz 34 des Gehäuses 12 einen weiteren Dichtsitz bilden kann.

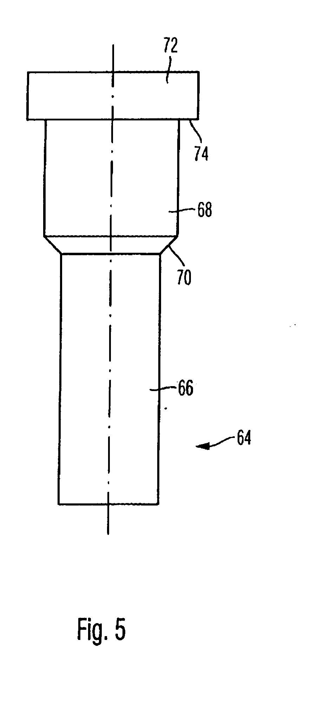

Fig. 5 zeigt eine alternative Ausgestaltung eines Betätigungsstiftes 64. Dieser weist vergleichbar dem in Fig. 4 gezeigten Betätigungsstift 14 ebenfalls einen radial verbreiterten Kopf 72 mit vergleichbaren Außenabmessungen wie der Kopf 36 des Betätigungsstiftes 14 auf. Allerdings weist der sich axial nach unten an den verbreiterten Kopf 72 anschließender Stiftteil Bereiche unterschiedlicher Querschnittsgeometrie auf. Ein oberer Zylinderabschnitt 68 ist dabei etwas breiter als ein sich daran anschließender Zylinderabschnitt 66 ausgebildet.

Der Übergang 70 zwischen den beiden Zylinderabschnitten 66, 68 ist vorliegend konisch ausgebildet. An seiner Unterseite weist auch dieser Kopf 72 eine Dichtfläche 74 auf, mit welcher der Betätigungsstift 64 einen Dichtsitz mit dem radial nach innen ragenden Absatz 34 des Gehäuses 12 bilden kann.

Dadurch, dass die beiden unterschiedlichen Ausgestaltungen 14, 64 von Betätigungsstiften gemäß der Fig. 4 und 5 aufgrund von im Wesentlichen identisch ausgebildeter Köpfe 36, 72 in ein als Standardbauteil ausgebildetes Gehäuse 12 universell einsetzbar sind, können allein durch Wahl eines entsprechenden Betätigungsstifts 14, 64 unterschiedliche Ausgestaltungen eines Kleintiertränkeventils in einfacher Art und Weise zur Verfügung gestellt werden.

### Bezugszeichenliste

- 10: Ventil
- 12: Grundgehäuse
- 14: Betätigungsstift
- 16: Oberstift
- 18: Leitungswand
- 20: Rücksprung
- 22: Vorsprung
- 24: Vertiefung
- 26: Nut
- 28: Dichtsitz
- 30: Konus
- 32: Konus
- 34: Vorsprung
- 36: Kopf
- 38: Gewinde
- 40: Konus
- 42: Zylinderabschnitt
- 44: Zylinderabschnitt
- 46: Zylinderabschnitt
- 48: Zylinderabschnitt
- 50: Stirnfläche
- 52: Dichtfläche
- 54: Randabschnitt
- 56: Betätigungsende
- 58: Leitungsende
- 60: Zylinderabschnitt
- 62: Anschlag
- 64: Betätigungsstift
- 66: Zylinderabschnitt
- 68: Zylinderabschnitt

- 70: konischer Übergang
- 72: Kopf
- 74: Dichtfläche

## Patentansprüche

1. Kleintiertränkeventil mit einem Ventilgrundgehäuse (12), an dessen Betätigungsende (56) ein von einem Tier zur Abgabe einer Flüssigkeitsmenge betätigbarer Betätigungsstift (14; 64) zumindest bereichsweise herausragt und in dessen, dem Betätigungsende (56) gegenüberliegenden Leitungsende (58), welches mit einer Flüssigkeit führenden Leitung (18) verbindbar ist, ein Oberstift (16) verschiebbar aufgenommen ist, der mit einem Innenwandungsabschnitt (30) des Grundgehäuses (12) einen Dichtsitz (28) bildet, **dadurch gekennzeichnet, dass** das Ventilgrundgehäuse (12) zwischen dem Dichtsitz (28) und dem Leitungsende (58) zumindest einen radial nach innen ragenden Vorsprung (22) aufweist, der mit einem am Oberstift (16) ausgebildeten radialen Rücksprung (20) eine Verliersicherung für den Oberstift (16) am Grundgehäuse (12) bildet.

2. Ventil nach Anspruch 1, wobei der radial nach innen ragende Vorsprung (22) durch eine von außen in das Grundgehäuse (12) einbringbare, radial nach innen gerichtete Materialverdrängung gebildet ist.

3. Ventil nach einem der vorhergehenden Ansprüche, wobei der radial nach innen ragende Vorsprung (22) mittels einer punktförmigen radial nach innen gerichteten Prägung des Grundgehäuses (12) bildbar ist.

4. Ventil nach einem der vorhergehenden Ansprüche, wobei der radial nach innen gerichtete Vorsprung (22) des Grundgehäuses (12) erst nach einem Einführen des Oberstifts (16) in das Grundgehäuse (12) bildbar ist.

5. Ventil nach einem der vorhergehenden Ansprüche, wobei am Grundgehäuse (12) mehrere über dessen Umfang gleichmäßig verteilt angeordnete, nach innen ragende Vorsprünge (22) ausgebildet sind.

6. Ventil nach einem der vorhergehenden Ansprüche, wobei das Ventilgrundgehäuse (12) zum Einschrauben in die Leitung (18) an seinem Leitungsende (58) ein Außengewinde (38) aufweist.

7. Ventil nach Anspruch 6, wobei das Grundgehäuse (12) eine umlaufende, in Richtung des Betätigungsendes (56) an das Gewinde (38) angrenzende Nut (26) aufweist.

8. Ventil nach Anspruch 7, wobei die Nut (26) zur formschlüssigen Aufnahme und Befestigung eines Schutzkörpers am Ventil ausgebildet ist.

9. Ventil nach Anspruch 7 oder 8, wobei das Grundgehäuse (12) im Bereich der Nut (26) zumindest eine mit dem innenliegenden Vorsprung (22) korrespondierende Vertiefung (24) aufweist.

10. Ventil nach einem der vorhergehenden Ansprüche, wobei das Grundgehäuse (12), der Oberstift (16) und der Betätigungsstift (14; 64) aus Metall, vorzugsweise aus Edelstahl gefertigt sind.

11. Ventil nach einem der vorhergehenden Ansprüche, wobei der Betätigungsstift (14; 64) mit einem innerhalb des Grundgehäuses (12) zu liegen kommenden radial verbreiterten Kopf (36; 72) an einem radial nach innen ausgebildeten Absatz (34) des Grundgehäuses (12) axial verschiebbar und/oder gegenüber der Symmetrieachse des Grundgehäuses (12) kippbar gehalten ist.

12. Ventil nach einem der vorhergehenden Ansprüche, wobei der Betätigungsstift (14; 64) an den Kopf (36; 72) angrenzend durchgehend zylindrisch (14) und/oder abgestuft zylindrisch (66, 68) ausgebildet ist.

13. Ventil nach einem der vorhergehenden Ansprüche, wobei der Oberstift (16) einen im Leitungsende (58) des Grundgehäuses (12) axial geführten oberen Zylinderabschnitt (46) und in einem daran angrenzenden Mittelabschnitt den als umlaufende Nut ausgebildeten Rücksprung (20) aufweist, an den ein unterer, radial verbreiterter Zylinderabschnitt (60) oder Konusabschnitt (32) angrenzt.

14. Ventil nach Anspruch 13, wobei im Übergangsbereich zwischen Rücksprung (20) und unterem Zylinderabschnitt (60) oder Konusabschnitt (38) eine radiale Anschlagsfläche (62) ausgebildet ist.

15. Verfahren zur Montage eines Kleintiertränkeventils nach einem der vorhergehenden Ansprüche mit folgenden Schritten:
- Einführen des Betätigungsstifts (14; 64) in das Leitungsende (58) des Grundgehäuses (12) bis der Stift (14; 64) mit einem radial verbreiterten Kopf (36; 72) an einem Absatz (34) des Gehäuses (12) zu liegen kommt,
- Einführen des Oberstifts (16) in das Leitungsende (58) des Grundgehäuses (12) bis dieser einen Dichtsitz (28) mit einem dafür vorgesehenen Grundgehäuseabschnitt (30) bildet,
- Einbringen einer Materialverdrängung von außen in das Grundgehäuse (12) zur Bildung eines radial nach innen, von der Innenwandung des Grundgehäuses (12) ragenden Vorsprungs (22), der zur Bildung einer Verliersicherung für den Oberstift (16) am Grundgehäuse (12) mit einem im Oberstift (16) ausgebildeten Rücksprung (20) korrespondiert.
